# EUROPEAN PATENT SPECIFICATION

(11) **EP 1 588 599 B1**
(45) Date of publication and mention of the grant of the patent: **24.06.2009**
(21) Application number: 04076199.1
(22) Date of filing: 21.04.2004
(51) Int. Cl.: A01D 34/73

(54) **A mowing device, a knife adapter for such a mowing device and a retainer for such a mowing device**
Mähgerät, Messeradapter für ein solches Mähgerät, und Halterung für ein solches Mähgerät
Dispositif faucheur, adaptateur de couteau pour un tel dispositif faucheur, et dispositif de retenue pour un tel dispositif faucheur

(43) Date of publication of application: 26.10.2005
(73) Proprietor: Lely Enterprises AG, 6300 Zug (CH)
(72) Inventor: Koorn, Martin, 3123 CP Schiedam (NL); Thompson, Kent L., Otley Iowa 50214 (US); Bentzinger, Rustin V., Pella Iowa 50219 (US)
(74) Representative: Corten, Maurice Jean F.M.

(56) References cited:
- EP-A- 0 517 645
- EP-A- 0 807 374
- EP-A- 1 358 786
- WO-A-90/14755
- GB-A- 1 447 759

## Description

The present invention relates to mowing device having a pivotal mounting arrangement for mounting a knife to a rotary disc, which makes replacement, or reorientation of the blade possible using only common tools, in particular according to the preamble of claim 1. Such a device is known from document WO 90/14755.

Knives used on rotary disc mowers contact the crop material at high speeds, in order to cut effectively. This results in inherent dulling and wear. At times these knives contact other objects such as the ground, rocks etc. causing additional wear. As a result the knives must routinely be maintained.

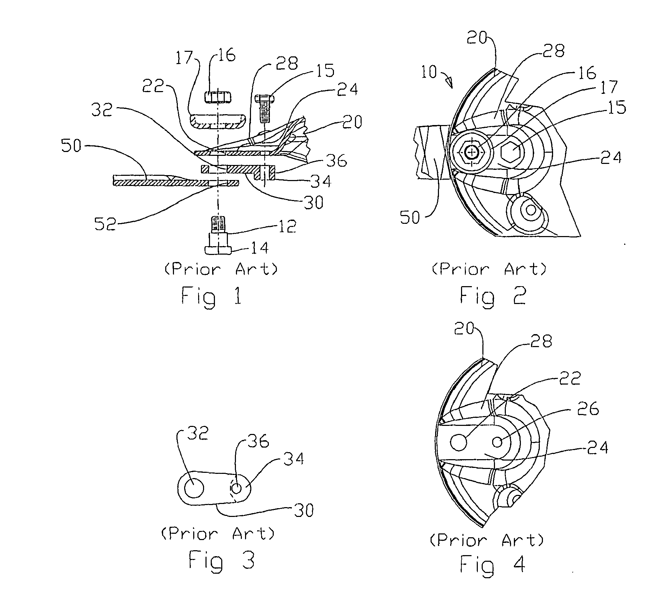

The knives are pivotally mounted to discs, in a manner to reduce impact loading on the sharpened edge when striking an obstacle. Figures 1-4 illustrate a prior art mounting arrangement. Mower disc assembly 10 includes knife adapter 30 that is attached to the bottom side of disc body 20, retained with bolt 15 which passes through aperture 26 of disc 20 and into threaded aperture 36 of knife adapter 30. The knife adapter 30 can alternatively be welded to disc body 20. Knife adapter 30 further includes a cylindrical aperture 32 that is located concentric with a cylindrical aperture 22 of the disc body 20, together defining the pivot axis of knife 50. Knife 50 includes a cylindrical aperture 52, sized to allow sleeve portion 12 of bolt 14 to pass through allowing sufficient clearance so that the knife 50 will pivot freely. The mounting arrangement is completed by installing bolt 14 through the aperture 52 of the blade 50, then through the aperture 32 of knife adapter 30, and finally through aperture 22 of disc body 20, and into its mating nut 16.

The top side of the disc body 20 is in contact with the material being cut, functioning to lift and propel the cut material away from the knife. It is exposed to significant wear, along with any components located on the top side of the disc 20, such as nut 16. If nut 16 is subjected to sufficient wear, the hex configuration of its outer surface can be degraded to the point that a wrench no longer mates adequately to allow removal. In order to protect the nut 16 from this excessive wear prior art mounting arrangements have included a wear protector 17 mounted on the top of the disc body, to protect the nut 16 from this excessive wear.

Disc 20 is adapted to provide for this mounting arrangement by providing mounting surface 24 on disc body 20 for supporting wear protector 17. The disc 20 further includes a transition area to the raised portion 28. This raised portion 28 tapers such that at the far outer diameter of the disc 20, it does not exist. At lesser diameters the raised portion is increasingly larger. This raised portion 28, and the transition area between it and the mounting surface 24, provides protection for bolt 15, which thus does not require a wear protector.

The knife adapter 30 often includes a tab 34 that prevents full rotation of the knife 50, in order to control its location, in order to avoid interference with other components of the machine.

This mounting arrangement requires that the several pieces be disassembled with wrenches in order to maintain the knives which is costly and difficult due to the number of knives on a machine.

According to the present invention there is provided a mowing device having an improved mounting arrangement for a knife to a disc as follows from the appended claims.
FIG. 1 is an exploded view of a prior art mounting arrangement of a knife onto a mower disc;
FIG. 2 is a partial top plan view of a mower disc with knife mounted in accordance with the prior art as illustrated in Figure 1;
FIG. 3 is a top plan view of a knife adapter of the prior art knife mounting;
FIG. 4 is a partial top plan view of the mower disc configured for the prior art knife mounting;
FIG. 5 is a top plan view of a mower disc with knives mounted in accordance with the present invention;
FIG. 6 is a bottom plan view of a mower disc with knives mounted in accordance with the present invention;
FIG. 7 is a cross-sectional side view of a mower disc, as defined by section line 7-7 in Figure 6, with the knives mounted in accordance with the present invention;
FIG. 7a is a view like FIG. 7, but of a slightly modified version wherein the retainer is not completely flat in the retained position so that it is easier to get a screwdriver under it for removal at a later time;
FIG. 8 is a top plan view and an exploded view of the mounting arrangement of a knife onto a mower disc of the present invention;
FIG. 8a is an exploded view of Fig.7;
FIG. 9 is a partial top plan view of the mower disc configured for the knife mounting arrangement of the present invention;
FIG. 10 is a top plan view of a blade retainer of the knife mounting arrangement of the present invention;
FIG. 11 is a top plan view of a knife adapter of the knife mounting arrangement of the present invention;
FIG. 12 is a top plan view of a mower disc with knives mounted in accordance with a second embodiment of the present invention;
FIG. 13 is a bottom plan view of a mower disc with knives mounted in accordance with a second embodiment of the present invention;
FIG. 14 is a cross-sectional side view of a mower disc, as defined by section line 14-14 in Figure 13, with the knives mounted in accordance with a second embodiment of the present invention;
FIG. 15 is a partial top plan view of the mounting arrangement of a knife onto a mower disc of a second embodiment of the present invention;
FIG. 15a is an exploded view of Fig 14;
FIG. 16 is a partial top plan view of the mower disc configured for the knife mounting arrangement of a second embodiment of the present invention;
FIG. 17 is a top plan view of a blade retainer of the knife mounting arrangement of a second embodiment of the present invention;
FIG. 18 is a top plan view of a knife adapter of the knife mounting arrangement of a second embodiment of the present invention;
FIG. 19 is a side view of a retaining pin used in the present invention;
FIG. 20 is a side view of a second embodiment of a retaining pin used in the present invention;
FIG. 21 is a top plan view of a retainer of the knife mounting arrangement of the present invention illustrating features to aid disassembly;
FIG. 22 is side view of an alternate embodiment of a retainer; and
FIG. 23 is a perspective view of the retainer in Fig 22.
FIG. 24 is a top plan view of the mower disc configured for the knife mounting arrangement and a knife mounted in accordance with a third embodiment of the present invention;
FIG. 25 is a cross-sectional side view of a mower disc, as defined by section line A-A in Figure 24, with a knife mounted in accordance with a third embodiment of the present invention;
FIG. 26 is a partial, perspective plan view of a mower disc with a knife mounted in accordance with a third embodiment of the present invention;
FIG. 27 is a perspective plan view of the knife adapter;
FIG. 28 is a partial, cross-sectional side view of a mower disc, as defined by section line A-A in Figure 24, with a knife mounted in accordance with a third embodiment of the present invention;
FIG. 29 is a cross-sectional side view taken on the centerline of the knife adapter in accordance with a third embodiment of the present invention;
FIG. 30 is a perspective view of the fastening pin by means of which a knife is mounted in accordance with a third embodiment of the present invention;
FIG. 31 is a top plan view of a retainer of the knife mounting arrangement of the third embodiment of the present invention;

Referring now to the drawings, like reference numerals designate identical or corresponding parts throughout the several views. The included drawings reflect the current preferred and alternate embodiments. There are many additional embodiments that may utilize the present invention. The drawings are not meant to include all such possible embodiments.

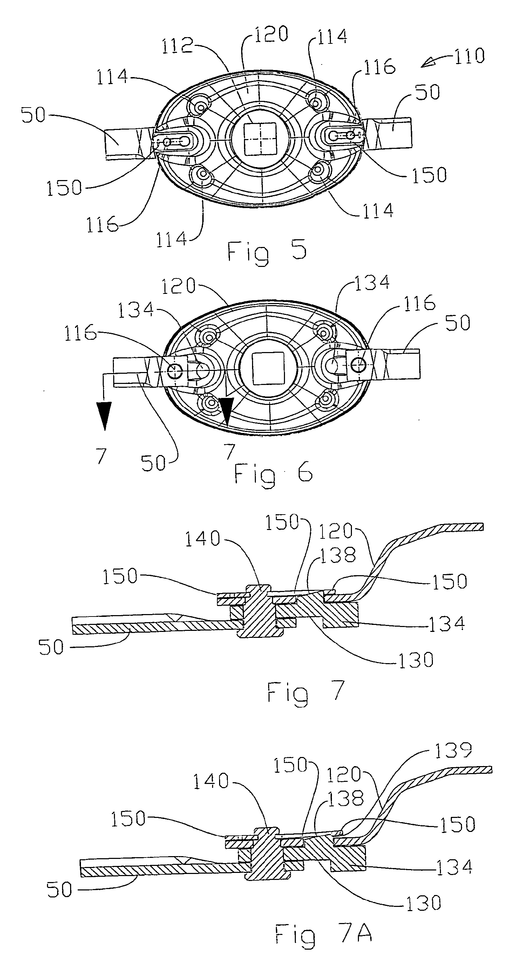

The figures 5-7 illustrate a mower disc assembly 110 of the present invention. A disc 120 includes a center pilot hole 112 that controls its alignment and location when installed onto a cutter bar which is comprised of a series of gears, a supporting frame/housing, and driveline to transfer power from a tractor PTO to the cutterbar. Additional holes 114 allow retainers, not shown, to securely attach other components such as crop deflectors, not shown, to the mower disc. Two knives 50 are installed onto the bottom of disc body 120, each with a knife adapter 130, a pin 140 and a retainer 150. The knife is free to rotate about pivot axis 116 until it contacts a tab 134 of the knife adapter 130.

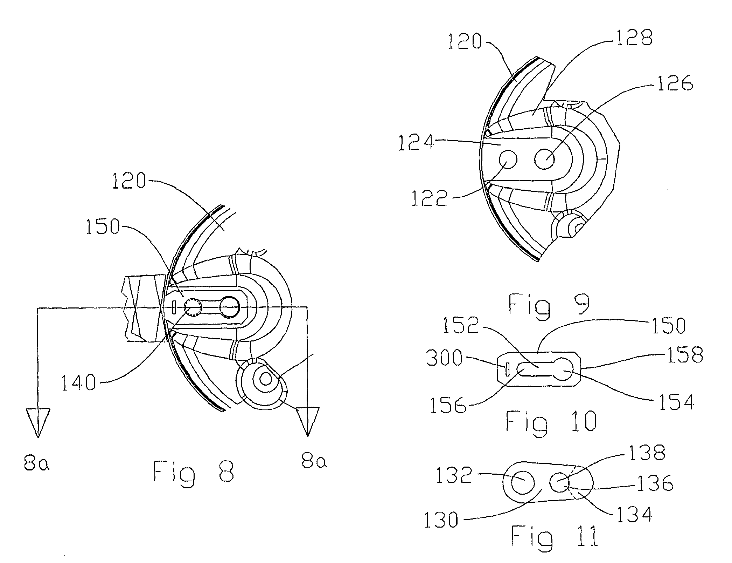

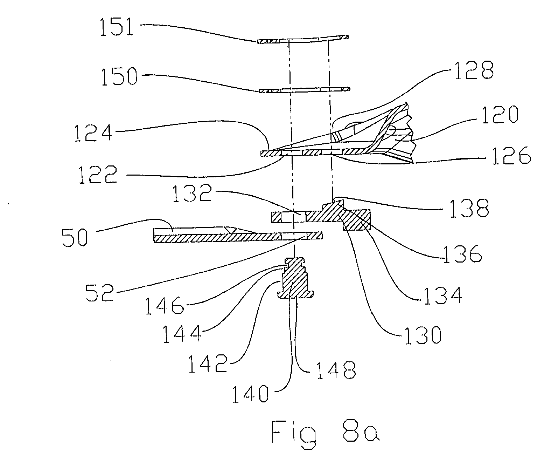

Figures 8 - 11 further illustrate a single knife mount of this embodiment of the present invention. The disc body 120 includes two cylindrical apertures 122 and 126, and a mounting surface 124, as illustrated in Figure 9, on each side, for each knife 50. It further includes a transition between the mounting surface 124 and raised portion 128.

The knife adapter 130 includes a cylindrical aperture 132, a tab 134, and a cylindrical projection 136 as illustrated in Figures 8, 8A and 11. The knife adapter 130 is fixedly attached to the bottom side of disc body 120, the preferred attachment method is welding, such that cylindrical projection 136 passes through aperture 126 of disc body 120 and extends above the mounting surface 124.

Pin 140 includes a first cylindrical portion 142 with a diameter slightly smaller than the aperture 52 in the blade 50, and a second cylindrical portion 144 that is slightly smaller than the aperture 122 of disc 120. It also includes a head portion 148 with a diameter larger than the aperture 52 in the knife 50. It further includes a retaining groove 146, located on the second cylindrical portion 144, with a width that slightly exceeds the thickness of retainer 150, and has a groove diameter that is smaller than the diameter of the second cylindrical portion 144.

Retainer 150 is made of a spring material of a thickness such that a significant force is required in order to deflect the retainer 150, yet it can be deflected significantly without being permanently deformed. This thickness is equal to or less than the material thickness of the disc body 120. It includes a key-hole shaped aperture 152 with a first end 154 and a second end 156. The first end 154 is wide enough that retainer 150 can be installed over the second end 144 of pin 140. The second end 156 of the key-hole aperture 152 is cylindrical with a diameter slightly larger than the groove 146 of pin 140.

The blade 50 is mounted to the disc by passing pin 140 through the aperture 52 in knife 50, then through aperture 132 in knife adapter 130 and aperture 122 in disc 120 such that groove 146 is located above surface 124. Pin 140 is retained in this position by placing retainer 150 onto the pin, passing the first end of the key-hole aperture 152 over the second end 144 of pin 140 until the retainer is against the surface 124 of disc 120. The retainer is then slid perpendicular (right in Figs 8 and 8A) to the pin 140, such that the second end 156 of the keyhole shaped aperture 152 engages the groove 146.

As retainer 150 is being slid along surface 124 a leading side 158 will come in contact with the ramped surface 138 of cylindrical projection 136 of knife adapter 130, which is extending above surface 124, through aperture 126 of disc 120. In order to slide retainer 150 to its proper position the retainer will be deflected up the ramped portion 138 of knife adapter 130. Upon reaching the installed position the retainer 150 will snap positively into place when first end of key-hole shaped aperture 152 slips over the cylindrical portion 136 of knife adapter 130, at such time the retainer 150 will return back towards its unloaded position, where it is straight as illustrated in FIG. 8A. Alternatively curved retainer 151, with a slight bend, could be utilized. If the curved retainer 151 is utilized, then it will snap towards its unloaded position represented by this slightly curved shape. In this position as shown in Fig. 8, the retainer 150 is held in position by the cylindrical projection 136. In order for it to move along surface 124 the leading side 158 of retainer 150 will need to be deflected far enough to clear the cylindrical projection 136 of blade retainer. In this manner, the pin 140 and knife 50 are retained to the disc 120, and removal of a knife 50 can be accomplished simply by using a tool capable of prying the leading end 158 of retainer 150 up and over the cylindrical projection 136 to the point it can be slid along surface 124. The removal operation is enhanced if the leading edge 158 is raised slightly above the top surface 124. This slightly raised area can be provided by a slightly curved retainer 151, or by providing an additional small step 139 as illustrated in Fig. 7A.

This mounting arrangement of Figs 5-8 thus provides a knife retention system that includes a retainer with a material thickness less than the material thickness of the disc, and a pin which does not require substantial wear protection. The raised portion 128 of the disc body 120 adequately protects the pin 140, thus there is no need for an additional wear protector. The overall height of the retaining components is small, minimizing the potential affect on the standing crop that is being cut.

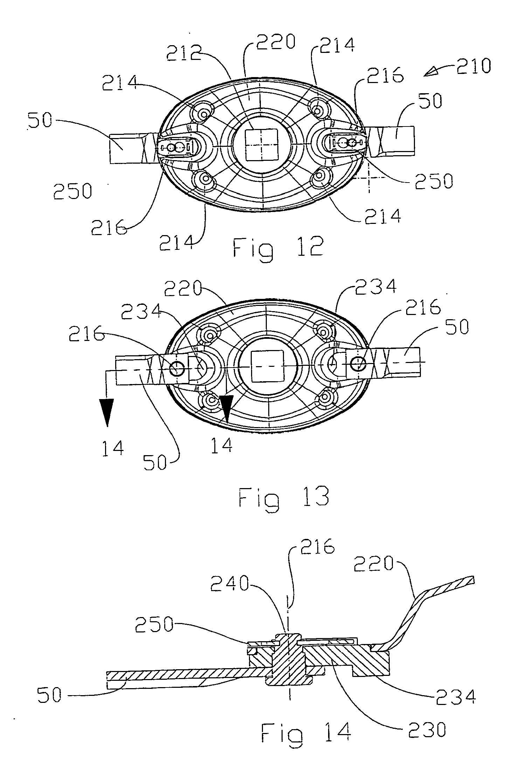

Figures 12-14 illustrate a second embodiment of a mower disc assembly 210 of the present invention. A disc 220 includes a center pilot hole 212 that controls its alignment and location when installed onto a cutter bar. Additional holes 214 allow retainers, not shown, to securely attach other components such as crop deflectors, not shown to the mower disc. Two knives 50 are installed onto the bottom of disc body 220, each with a knife adapter 230, a pin 240 and a retainer 250. The knife is free to rotate about pivot axis 216 until it contacts a tab 234 of the knife adapter 230.

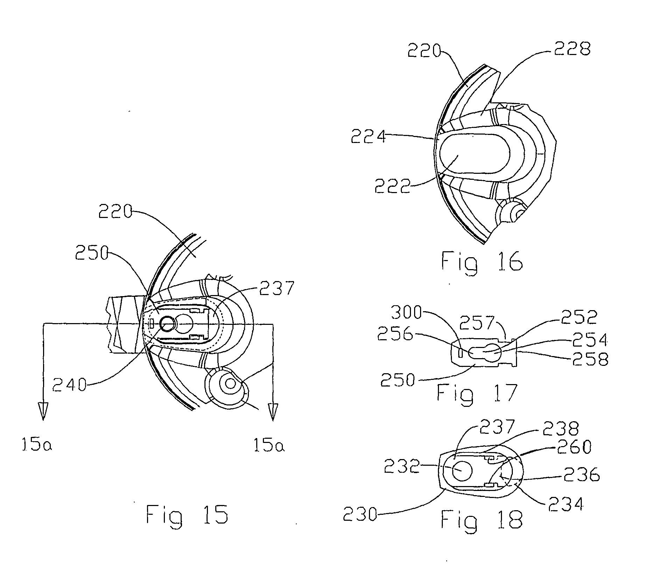

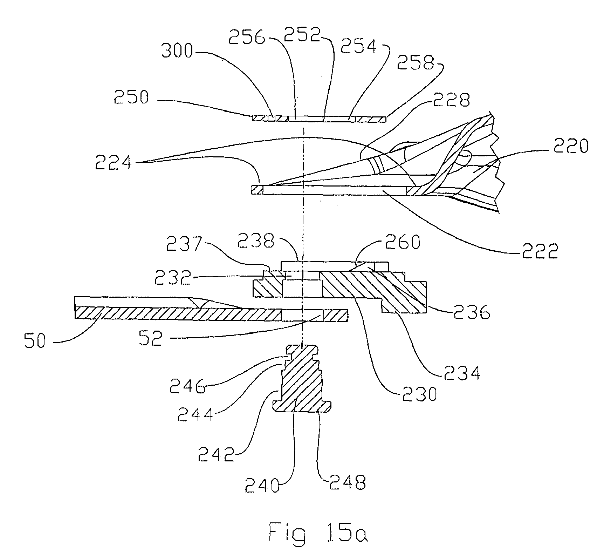

Figures 15 - 18 further illustrate a single knife mount of this embodiment of the present invention. The disc body 220 includes one slot-shaped aperture 222, and a mounting surface 224, as illustrated in Figure 16, on each side, for each knife 50. The previously described embodiment could also be implemented with a disc body configured in this manner, if the knife retainer 130 were configured in accordance. Disc body 220 further includes a transition between the mounting surface 224 and raised portion 228.

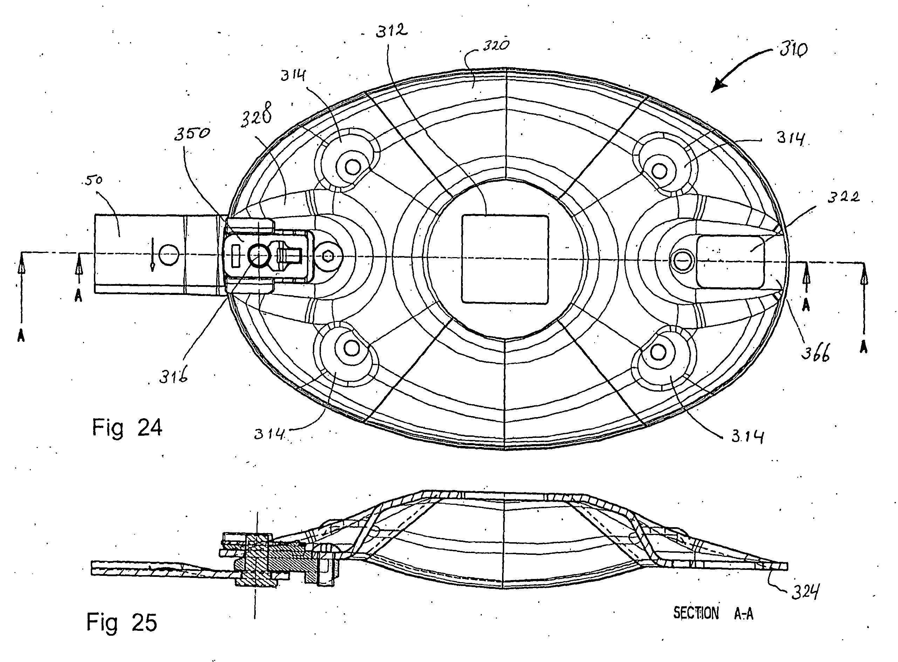

The knife adapter 230 includes a cylindrical aperture 232, a tab 234, and a projection 236 shaped to fit into the slot-like aperture 222 of disc 220, as illustrated in Figures 15 and 18. Projection 236 includes a surface 237 and further includes a top portion 238 with ramped tabs 260. The knife adapter 230 is fixedly attached to the bottom side of disc body 220, the preferred attachment method is welding, such that projection 236 passes through aperture 222 of disc body 220 and top portion 238 extends above the mounting surface 224 while surface 237 is in-line with mounting surface 224, or is slightly raised above surface 224. However, an embodiment in which the knife adapter is releasable attached to the disc by means of bolts or screws will be later described with reference to Figs. 24 to 28.

As illustrated in Fig. 15A, pin 240 includes a first cylindrical portion 242 with a diameter slightly smaller than the aperture 52 in the blade 50, and a second cylindrical portion 244 that is slightly smaller than cylindrical portion 244. It also includes a head portion 248 with a diameter larger than the aperture 52 in the knife. It further includes a retaining groove 246, located on the second cylindrical portion, with a width that slightly exceeds the thickness of retainer 250, and has a groove diameter that is smaller than the diameter of the second cylindrical portion 256.

Retainer 250 is made of a spring material of a thickness such that a significant force is required in order to deflect the retainer, yet it can be deflected significantly without being permanently deformed. It includes a key-hole shaped aperture 252 with a first end 254 and a second end 256. The first end 254 is wide enough that retainer 250 can be installed over the second end 246 of pin 240. The second end 256 of the key-hole aperture 252 is cylindrical with a diameter slightly larger than the groove 246 of pin 240, and smaller than the diameter of the second end 244 of pin 240. The retainer 250 further includes two notches 257, one on each side. Retainer 250 will have an unloaded shape, which is flat as illustrated in Fig. 15A. It could alternatively include a slightly bent portion at the leading edge 258, to assist removal, as previously described for retainer 151.

The blade 50 is mounted to the disc by passing pin 240 through the aperture 52 in knife 50, then through aperture 232 in knife adapter 230 such that groove 246 is located above surface 237 or 224. Pin 240 is retained in this position by placing retainer 250 onto the pin, passing the first end 254 of the key-hole aperture 252 over the second end 244 of pin 240 until the retainer is against the surface 224 of disc 220 or surface 237 of knife retainer 230. The retainer is then slid perpendicular to the pin 240, such that the second end 256 of the keyhole shaped aperture 252 engages the groove 246.

As retainer 250 is being slid along surface 226 or 237 a leading side 258 will come in contact with ramped tabs 260 of knife adapter 230, which extend above surface 224 and/or surface 237, through aperture 222 of disc 220. In order to slide to its proper position the retainer will be deflected up the ramped tabs 260 of knife adapter 230. Upon reaching the installed position the retainer 250 will snap into place when notches 257 align with the ramped tabs 260 of knife adapter 230, the retainer 250 returning back towards it unloaded position where it is straight as shown in Figure 15. In this position, the retainer 250 is held in position by the tabs 260. In order for it to move along surface 224 or 237, the leading side 258 of retainer 250 will need to be deflected up, far enough to clear the ramped tabs 260 of knife adapter 230, before it can be slid along surface 224 or 237. In this manner, the pin 240 and knife 50 are retained to the disc 220, and removal of a knife 50 can be accomplished simply by using a tool capable of prying retainer 250 up to the point it can be slid along surface 124 or 237. The prying tool can, for example, be a screw driver and the leading edge may be held from the surface 124 by a tab, such that the retainer 250 is slightly deflected in the installed position, or by the fact that the retainer includes a slight bend.

The ramped tabs 260 of knife adapter 230 and the cooperating notches 257 of retainer 250 in this second embodiment provide the same function as the projection 136 and first end 154 of aperture 152 of the first embodiment. These are examples of many different types of arrangements that could be utilized to secure the retainer to the knife adapter , or a different feature of the mower disc itself.

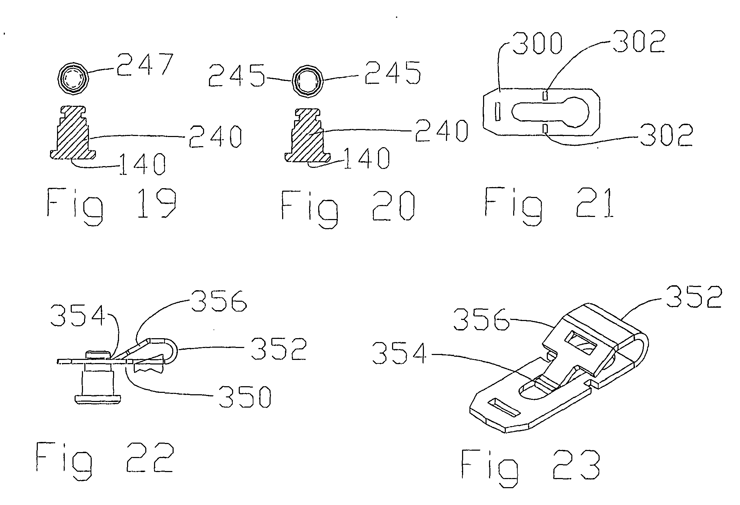

The retainers, as in retainer 150 and 250, may include slot 300, as illustrated in Fig 21, which is provided for disassembly. The slot 300 will be sized and positioned such that a screwdriver, or the like will be able to be utilized to engage the slot in order to assist in prying on the retainer to slide it relative to the disc.

Additional slots, such as slot 302 shown in Fig. 21, or other surface features may be added in order that the retainers will break at defined locations during disassembly. Thus, when the retainer is pried-on to remove the knife, the section of the retainer that is engaged with the tabs or projections of the knife adapter or disc will separate from that portion that is engaged with the pin. This would allow both of the resulting pieces to be easily removed.

Figures 19 and 20 illustrate optional configurations of the grooves in the pin 140 and 240. The grooves could be full annular grooves 247 as illustrated in Figure 19, or slots 245, one on each side as illustrated in Figure 20.

Figures 22 and 23 illustrate an additional embodiment of a retainer 350 with an additional curved section 352. The end 354 is narrow enough to fit into the key-hole slot of the retainer, similarly shaped to the key hole slots in retainers 130 and 230. The end 354 will then engage with the groove in the pin to increase the bearing surface under the pin head and providing a locking feature that prevents the retainer 350 from sliding. End section 356 forms a tapered profile, approximately paralleling the raised portion 128, 228 of disc 120, 220 such that the disc 120, 220 will protect it.

Figures 24 to 31 illustrate a further alternate embodiment according to the invention. These figures illustrate a third embodiment of a mower disc assembly 310 of the present invention. A disc 320 includes a center pilot hole 312 that controls its alignment and location when installed onto a cutter bar. Additional holes 314 allow retainers, not shown, to securely attach other components such as crop deflectors, not shown, to the mower disc. Two knives 50 are installed onto the bottom of the disc body 320. The figures 24 - 26 and 28 illustrate a single knife mount of this embodiment of the present invention. The disc body 320 includes one aperture 322 and a surface 324, as illustrated in figures 24 and 25, on each side, for each knife 50. Furthermore, the disc body 320 includes a transition between surface 366 and raised portion 328. Each knife is mounted by means of a knife adapter 330, a pin 340 and a retainer 350. These elements will now first be described separately.

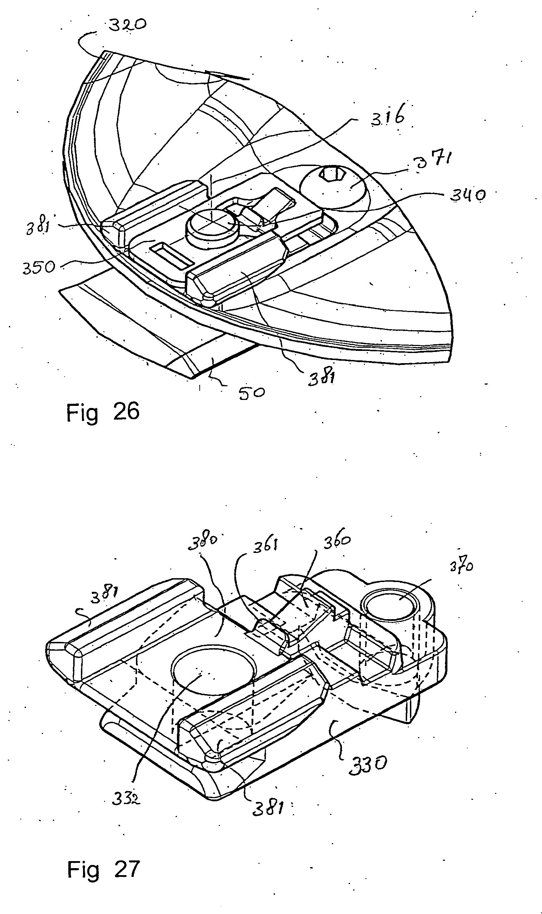

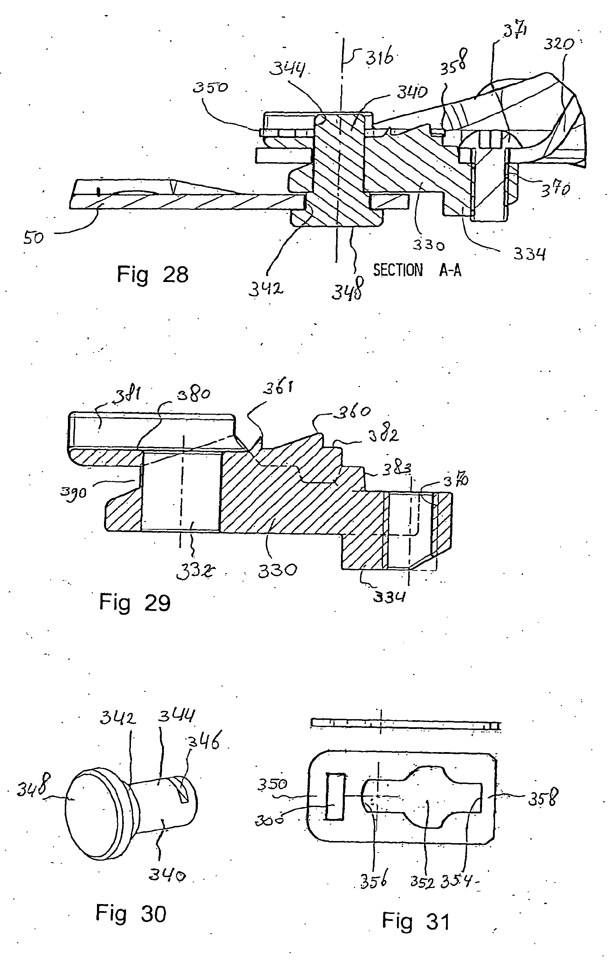

The knife adapter 330, which is shown as a separate unit in figures 27 and 29, is shaped to fit into the aperture 322 of disc 320. The knife adapter 330 is fixedly attached to the bottom side of disc body 320. On one side the knife adapter has a v-shaped groove 390; on its other side a screw thread 370 is tapped into the knife adapter. On mounting, the side of the knife adapter including the tapped hole 370 is first inserted into the aperture 322, subsequently the v-groove of the knife adapter is brought into contact with the edge of aperture 322 which is located closest to the circumference of the disc 320, and finally a vertically slightly slanting edge 383 of the knife adapter, located opposite the v-groove, is slid into the aperture of the disc 320. The slightly slanting edge 383 ensures a desirable fastening clamping of the knife adapter in the aperture of the disc 320. By means of a bolt connection, preferably a bolt 371 with a space-saving (flat) head, the knife adapter 330 is fixedly mounted to the bottom side of disc body 320. After mounting, the situation as shown in figures 24, 25, 26 and 28 is obtained. The knife adapter includes a cylindrical aperture 332 and a tab 334. The upper side of the knife adapter 330 includes a base plane 380 for a retainer. Said base plane includes ramped tabs 360 and 361, of which tab 360 has the main function of attaching the retainer. On both sides of the base plane 380 of the retainer there are provided two thick edges 381. The greatest distance between the edge ends is greater than the width of the aperture 322 in the disc 320.

As illustrated in figures 28 and 30, the fastening pin 340 for the knife mounting includes a first cylindrical portion 342 with a diameter slightly smaller than the fastening aperture in the blade 50, and a second cylindrical portion 344 that is slightly smaller than cylindrical portion 342. It also includes a head portion 348 with a diameter larger than the aperture in the knife. It further includes a retaining groove 346, located on the second cylindrical portion, with a width that slightly exceeds the thickness of retainer 350, and consisting of slots, one on each side as illustrated in figure 30.

The retainer 350, shown in figure 31, is made of a spring material of a thickness such that a significant force is required in order to deflect the retainer, yet it can be deflected significantly without being permanently deformed. It includes a slot-shaped aperture 352 with a first end 354 and a second end 356. Aperture 352 is wide enough that retainer 350 can be installed over the second end 344 of pin 340. The width of second end 356 of the slot-shaped aperture 352 is slightly larger than the groove 346 of pin 340, and smaller than the diameter of the second end 344 of pin 340. Retainer 350 will have an unloaded shape, which is flat as illustrated in figure 31. It could alternatively include a slightly bent portion at the side of slide 358, to assist removal, as previously described for retainer 151.

The blade 50 is mounted to the disc by passing pin 340 through the aperture in knife 50, then through aperture 332 in knife adapter 330 such that groove 346 is located above surface 380. Pin 340 is retained in this position by placing retainer 350 onto the pin, passing the aperture 352 over the second end 344 of pin 340 until the retainer is against the base plane 380 of knife adapter 330. The retainer is then slid perpendicular to the pin 340, such that the second end 356 of the aperture 352 comes into contact with the second end 344 of pin 340. After mounting, the knife is free to rotate about pivot axis 316 until it contacts a tab 334 of the knife adapter 330. The slots of retaining groove 346 on both sides of pin 340 prevent pin 340 from rotating in the connection. Destructive pin wear is thus prevented in a simple and effective manner.

As retainer 350 is being slid along surface 380 the leading slide 358 will come into contact with ramped tabs 360 and 361 of knife adapter 330, which extend above surface 380. In order to slide to its proper position the retainer will be deflected up the ramped tabs 360 and 361 of knife adapter 330. On reaching the installed position the retainer 350 will snap positively into place when first end 354 of shaped aperture 352 slips over ramped tab 360. As the base plane for the leading slide 358 is located somewhat higher than base plane 380, the retainer 350 will not completely return towards its unloaded position. There is now pre-tension in retainer 350, which contributes to an enhanced clamping. The presence of ramped tab 361 is the result of further safety-thinking. If the situation should ever occur that the retainer 350 looses contact with ramped tab 360, ramped tab 361 will ensure a second safety guarantee. In this case retainer 350 will catch behind ramped tab 361. The engagement of the part of the retainer that is inside the slots of pin 340 is maintained when the retainer has been slid from catching ramped tab 360 to catching ramped tab 361. Therefore, in this situation a complete blocking of pin 340 is maintained. Breaking of the bolt 371 by means of which the knife adapter is fastened in the disc 320 does not create a dangerous situation owing to the fact that the greatest distance between the ends of the thick edges 381 is greater than the width of the aperture 322 in the disc 320. If breaking should ever occur, then the thick edges 381 of the knife adapter will ensure that the knife adapter will not come loose from the disc. The thick edges 381 of the knife adapter further ensure protection against wear and damage of the components of the knife fastening concept that are located inside the edges, in particular of the fastening pin and the retainer. The knife fastening is thus properly secured.

The ramped tabs 360 and 361 of knife adapter 330 secure the retainer to the knife adapter. In the normal fastening position, the retainer 350 is held in position by the tab 360. Removal of a knife 50 can be accomplished simply by using a tool capable of prying slide 358 of retainer 350 up and over the ramped tabs 360 and 361 to the point it can be slid along surface 380. The removal operation is enhanced if slide 358 is raised slightly above the top surface 382 or hangs over to some extent. In order for it to move along surface 380, slide 358 of retainer 350 will need to be deflected up, far enough to clear the ramped tabs 360 and 361 of knife adapter 330, before it can be slid along surface 380. This can be accomplished simply by using a tool capable of prying retainer 350 up to the point it can be slid along surface 380. The prying tool is disposed for example between the fastening bolt of the bolt connection between the knife adapter and slide 358 of retainer 350. By means of a pushing movement against the rear side 358 of the retainer the latter is slid gradually in a direction away from the disc center. When the retainer is pried-on to remove the knife, the section of the retainer that is engaged with the groove of pin 340 will separate from that portion at the moment when the retainer has been slid to such an extent that aperture 352 surrounds the retainer. Pin 340 and knife 50 can now easily be removed. The prying tool can for example be a screw driver. The retainer may include slot 300. The slot 300 will be sized and positioned such that a screwdriver or the like will be able to be utilized to engage the slot in order to assist in prying on the retainer to slide it relative to the base plane of the knife adapter.

Obviously many modifications and variations of the present invention are possible in light of the above teachings, including variations in the shape of the knife mount pin and cooperating apertures in the knife adapter. It is known to use various configurations of these components, other than the herein specified cylindrical shapes. These would include conical sections, and could include pins with various cross-sections such as square or hexagonal. It is therefore to be understood that, within the scope of the appended claims, the invention may be practiced otherwise than as specifically described.

## Claims

1. A mowing device (10) including a disc (120; 220; 320), the disc providing a mount for at least one knife (50), said knife being pivotably mounted to said disc by a pivot pin (140; 240; 340), said pivot pin defining a mounting axis, such that the knife can rotate about said pivot pin between a first extended position and any retracted position, said disc being constructed of a basic material thickness and comprising a mounting surface; said mowing device including a knife adapter (130; 230; 330) comprising a cylindrical aperture (132; 232; 332) and a projection (136; 236); said pivot pin comprising a first cylindrical section (142; 242; 342) of a first diameter to fit into said cylindrical aperture in said knife adapter, and a second cylindrical section (144; 244; 344), of a second diameter, with a groove (146; 246; 346) defined by a groove width and a pin section thickness at the groove of a dimension less than said second diameter; said mowing device including a retainer (150; 250; 350) constructed of a material thickness equal to or less than the width of said groove, with an aperture (152; 252; 352) defined by a first circular section (154; 254, 356) with a first inside diameter larger than said second diameter of said pin and a section (156; 256; 356) with a width that is greater than said pin section thickness but less than said second diameter of said pivot pin; wherein said section of the retainer engages said groove of said pivot pin to retain said pivot pin while said projection of said knife adapter engages said retainer, said knife (50) has an aperture (52) therein, said disc having an opening (122), said knife adapter being disposed in said opening, said pin having one end (142; 242; 342) being operatively configured so that it will not pass through the aperture in the knife and the other end (144; 244; 344) of the pin having a recess therein, said pin extending through the aperture in the knife (50) and the aperture in the knife adapter, said retainer also being disposed over the other end of the pin to a first position thereof, and when the retainer is moved in a direction transverse to the axis of the pin to a second position of the retainer a first part of the retainer engages the recess in the pin and a second part of the retainer engages something other than the pin to hold the retainer from moving from the recess in the pin, **characterized in that,** said aperture is a key-hole shaped aperture (152; 252; 352) defined by the first circular section and said section, wherein said section is a slot shaped section, said disc having a second opening, said projection of the knife adapter being disposed into the second opening of the disc, said retainer engaging said projection with the first circular section of the key-hole shaped aperture.

2. A mowing device as claimed in claim 1, wherein said pivot pin retainer (130; 230; 330) is constructed of a material thickness equal to or less than said basic material thickness of said disc.

3. A mowing device as claimed in claim 1 or 2, wherein the something other than the pin (140; 240; 340) is a ramped projection operatively attached to the knife adapter (130; 230; 330), whereby movement of the second part of the retainer over the ramped projection causes the second part of the retainer to move at least partially in the first parallel direction to the second axis when moved toward the second position thereof and then back in an opposite direction to the first parallel direction once the second part of the retainer is disposed completely over the projection.

4. A mowing device as claimed in claim 3, wherein said ramped projection has a structure thereon for holding the second part of the retainer (150; 250; 350) in a position wherein a prying device can easily be placed under the second part of the retainer for ease in removal of the retainer.

5. A mowing device as claimed in any one of the preceding claims, wherein said knife adapter (130; 230; 330) is welded to said disc (120; 220; 320).

6. A mowing device as claimed in any one of the claims 1 to 4, wherein said knife adapter (130; 230; 330) is releasably mounted to said disc (120; 220; 320).

7. A mowing device as claimed in claim 6, wherein said knife adapter (130; 230; 330) comprises a further cylindrical aperture for receiving a bolt (371) or screw for mounting the knife adapter to said disc (120; 220; 320), said disc having a further opening for receiving said bolt or screw.

8. A mowing device as claimed in claim 7, wherein said further cylindrical aperture has a screw thread (370).

9. A mowing device as claimed in any one of the preceding claims, wherein the groove of the pivot pin (146; 246; 346) is formed by two slots (245), each on one side of the pivot pin (240).

10. A method of changing knives (50) in a device (10) for mowing including a disc (120; 220; 320) mounted to a rotating driver, the disc providing a mount for at least one knife having a circular aperture therein, defining a first opening having a mounting axis when a pivot pin (140; 240; 340) is retained to said disc, such that the knife can rotate about said pivot pin between a first extended position and any retracted position, the disc constructed of a basic material thickness and comprising a mounting surface; a knife adapter (130; 230; 330) comprising a cylindrical aperture (132; 232; 332); said pivot pin comprising a first cylindrical section (142; 242; 342) of a first diameter to fit into said cylindrical aperture in knife adapter, and a second cylindrical section (144; 244; 344), of a second diameter, with a groove (146; 246; 346) defined by a groove width and a pin section thickness at the groove of a dimension less than said second diameter; a retainer (150; 250; 350) constructed of a material thickness equal to or less than said basic material thickness of said disc, with a first key-hole shaped aperture (152; 252; 352) defined by a first circular section adjacent a first end thereof with a first inside diameter larger than said second diameter of said pin and a slot shaped section with a width that is greater than said pin section thickness but less than said second diameter of said pivot pin adjacent a second end thereof; wherein said slot-shaped section of the retainer engages said groove of said pivot pin to retain said pivot pin while said projection of said knife adapter engages said retainer, said method comprising:
moving the pin (140; 240; 340) so that it extends through the aperture (52) in the knife (50) and through said cylindrical aperture (132; 232; 332) in the knife adapter (130; 230; 330) and through the first opening in the disc; **characterized in that,** the disc also has a second opening therein, **in that** said knife adapter comprises a projection, said method further comprising:
moving the knife adapter (130; 230; 330) from below the disc (20; 120; 220; 320) so that the projection thereof is disposed into the second opening in the disc;
moving the retainer so that the first circular section of the key-hole shaped aperture (152; 252; 352) extends around the pin (140; 240; 340); and
moving the retainer toward projection of the knife adapter until the first circular section of the key-hole shaped aperture of the retainer moves over the projection of the knife adapter and wherein the retainer engages the groove (146; 246; 346) of the pin thereby securely holding the knife pivotally attached to the disc.

11. A method as claimed in claim 10 including removal of the knife (50) comprising:
(a) prying the first end of the retainer (130; 230; 330) upwardly;
(b) moving the first end of the retainer over the top of the projection of the knife retainer;
(c) moving the retainer so that the first circular section of the key-hole shaped aperture (152; 252; 352) of the retainer moves above the pin (140; 240; 340);
(d) moving the relative position of the pin and the retainer so that the first circular section of the key-hole shaped aperture of the retainer is no longer surrounding the pin; and
(e) moving the pin so that it no longer extends through the aperture (52) in the knife and through said cylindrical aperture in the knife adapter whereby the knife can be reoriented or replaced.

## Patentansprüche

1. Mähgerät (10), das eine Scheibe (120; 220; 320) umfasst, wobei die Scheibe mit einer Halterung für zumindest ein Messer (50) versehen ist, wobei das Messer über einen Drehzapfen (140; 240; 340) drehbar an der Scheibe angebaut ist, wobei der Drehzapfen eine Montageachse definiert, so dass das Messer zwischen einer ersten ausgefahrenen Position und jeglicher eingefahrenen Position um den Drehzapfen drehen kann, wobei die Scheibe aus einer Grundmaterialstärke konstruiert ist und eine Montagefläche umfasst; wobei das Mähgerät einen Messeradapter (130; 230; 330) mit einer zylindrischen Öffnung (132; 232; 332) und einem Vorsprung (136; 236) umfasst; wobei der Drehzapfen einen ersten zylindrischen Teilabschnitt (142; 242; 342) mit einem ersten Durchmesser zum Passen in die zylindrische Öffnung in dem Messeradapter und einen zweiten zylindrischen Teilabschnitt (144; 244; 344) mit einem zweiten Durchmesser mit einer Nut (146; 246; 346) umfasst, die durch eine Nutbreite und eine Zapfenabschnittstärke in der Nut mit einer Dimension definiert ist, welche geringer als der zweite Durchmesser ist; wobei das Mähgerät einen Halter (150; 250; 350) umfasst, der aus einem Material mit einer Materialstärke konstruiert ist, die gleich der oder geringer als die Breite der Nut ist, mit einer Öffnung (152; 252; 352), die definiert ist durch einen ersten kreisförmigen Abschnitt (154; 254; 356) mit einem ersten Innendurchmesser, der größer ist als der zweite Durchmesser des Zapfens, und einen Abschnitt (156; 256; 356) mit einer Breite, die größer ist als die Zapfenabschnittstärke, jedoch geringer als der zweite Durchmesser des Drehzapfens; wobei der Abschnitt des Halters mit der Nut des Drehzapfens zum Halten des Drehzapfens in Eingriff steht, während der Vorsprung des Messeradapters mit dem Halter in Eingriff steht, wobei das Messer (50) eine Öffnung (52) aufweist, wobei die Scheibe eine Öffnung (122) aufweist, wobei der Messeradapter in der Öffnung angeordnet ist, wobei der Zapfen ein Ende (148; 248; 348) aufweist, das derart funktionsfähig gestaltet ist, dass es nicht durch die Öffnung in dem Messer gelangt, und das andere Ende (144; 244; 344) des Zapfens eine Aussparung darin aufweist, wobei der Zapfen durch die Öffnung in dem Messer (50) und die Öffnung in dem Messeradapter verläuft, wobei der Halter außerdem über dem anderen Ende des Zapfens in einer ersten Position zu diesem angeordnet ist, und wenn der Halter in einer Querrichtung zur Achse des Zapfens in eine zweite Position des Halters verschoben ist, ein erstes Teil des Halters mit der Aussparung in dem Zapfen in Eingriff steht und ein zweites Teil des Halters mit etwas Anderem als dem Zapfen in Eingriff steht, um den Halter von einer Verschiebung aus der Aussparung in dem Zapfen abzuhalten,
**dadurch gekennzeichnet, dass** die Öffnung eine schlüssellochförmige Öffnung (152; 252; 352) ist, die durch den ersten kreisförmigen Abschnitt und den Abschnitt, der ein schlitzförmiger Abschnitt ist, definiert ist, wobei die Scheibe eine zweite Öffnung aufweist und der Vorsprung des Messeradapters in der zweiten Öffnung der Scheibe angeordnet ist, wobei der erste kreisförmige Abschnitt der schlüssellochförmigen Öffnung des Halters mit dem Vorsprung in Eingriff steht.

2. Mähgerät nach Anspruch 1,
wobei der Drehzapfenhalter (150; 250; 350) aus einem Material konstruiert ist, dessen Stärke gleich der oder geringer als die Grundmaterialstärke der Scheibe ist.

3. Mähgerät nach einem der Ansprüche 1 oder 2,
wobei das etwas Andere als der Zapfen (140; 240; 340) ein Rampenvorsprung ist, der funktionsfähig an dem Messeradapter (130; 230; 330) angebracht ist, wobei die Verschiebung des zweiten Teils des Halters über den Rampenvorsprung bewirkt, dass das zweite Teil des Halters zumindest in der ersten Parallelrichtung zu der zweiten Achse bewegt wird, wenn es in die zweite Position verschoben wird, und dann zurück in eine Gegenrichtung zur ersten Parallelrichtung verschoben wird, sobald das zweite Teil des Halters vollständig über den Vorsprung angehoben ist.

4. Mähgerät nach Anspruch 3,
wobei der Rampenvorsprung eine Struktur zum Halten des zweiten Teils des Halters (150; 250; 350) in einer Position aufweist, in der ein Stemmgerät leicht unter das zweite Teil des Halters zur erleichterten Abnahme des Halters angeordnet werden kann.

5. Mähgerät nach einem der vorhergehenden Ansprüche,
wobei der Messeradapter (130; 230; 330) an die Scheibe (120; 220; 320) geschweißt ist.

6. Mähgerät nach einem der Ansprüche 1 bis 4,
wobei der Messeradapter (130; 230; 330) lösbar an der Scheibe (120; 220; 320) angebracht ist.

7. Mähgerät nach Anspruch 6,
wobei der Messeradapter (130; 230; 330) eine weitere zylindrische Öffnung zum Aufnehmen eines Bolzens (371) oder einer Schraube zum Anbringen des Messeradapters an der Scheibe (120; 220; 320) umfasst, wobei die Scheibe eine weitere Öffnung zum Aufnehmen des Bolzens oder der Schraube aufweist.

8. Mähgerät nach Anspruch 7,
wobei die weitere zylindrische Öffnung ein Schraubengewinde (370) aufweist.

9. Mähgerät nach einem der vorhergehenden Ansprüche,
wobei die Nut (146; 246; 346) des Drehzapfens durch zwei Schlitze (245), jeder auf einer Seite des Drehzapfens (240), ausgebildet ist.

10. Verfahren zum Austauschen von Messern (50) in einem Gerät (10) zum Mähen, beinhaltend eine Scheibe (120; 220; 320), die an einem drehenden Antrieb angebracht ist, wobei die Scheibe mit einer Halterung für zumindest ein Messer mit einer kreisförmigen Öffnung darin versehen ist, die eine erste Öffnung mit einer Montagesachse definiert, wenn ein Drehzapfen (140; 240; 340) an der Scheibe gehalten ist, sodass das Messer zwischen einer ersten ausgefahrenen Position und jeglicher eingefahrenen Position um den Drehzapfen drehen kann, wobei die Scheibe aus einer Grundmaterialstärke konstruiert ist und eine Montagefläche umfasst; einen Messeradapter (130; 230; 330) mit einer zylindrischen Öffnung (132; 232; 332) umfasst; wobei der Drehzapfen einen ersten zylindrischen Abschnitt (142; 242; 342) mit einem ersten Durchmesser zum Passen in die zylindrische Öffnung in dem Messeradapter und einen zweiten zylindrischen Abschnitt (144; 244; 344) mit einem zweiten Durchmesser mit einer Nut (146; 246; 346) umfasst, die durch eine Nutbreite und eine Zapfenabschnittstärke in der Nut mit einer Dimension definiert ist, welche geringer als der zweite Durchmesser ist; einen Halter (150; 250; 350), der aus einem Material mit einer Materialstärke konstruiert ist, die gleich der oder geringer als die Grundmaterialstärke ist, mit einer ersten schlüssellochförmigen Öffnung (152; 252; 352), die durch einen einem ersten Ende benachbarten ersten kreisförmigen Abschnitt mit einem ersten Innendurchmesser, der größer als der zweite Durchmesser des Zapfens ist, und einen einem zweiten Ende benachbarten schlitzförmigen Abschnitt mit einer Breite, die größer als die Zapfenabschnittstärke, jedoch geringer als der zweite Durchmesser des Drehzapfens ist, definiert ist; wobei der schlitzförmige Abschnitt des Halters mit der Nut des Drehzapfens zum Halten des Drehzapfens in Eingriff steht, während der Vorsprung des Messeradapters mit dem Halter in Eingriff steht, das Verfahren umfassend:
ein derartiges Bewegen des Zapfens (140; 240; 340), dass er durch die Öffnung (52) in dem Messer (50) und durch die zylindrische Öffnung (132; 232; 332) in dem Messeradapter (130; 230; 330) und durch die erste Öffnung in der Scheibe verläuft;
**dadurch gekennzeichnet, dass** die Scheibe außerdem eine zweite Öffnung aufweist, dass der Messeradapter einen Vorsprung umfasst, das Verfahren ferner umfassend:
ein derartiges Bewegen des Messeradapters (130; 230; 330) von unten an die Scheibe (20; 120; 220; 320), dass der Vorsprung in der zweiten Öffnung in der Scheibe angeordnet wird;
ein derartiges Bewegen des Halters, dass der erste kreisförmige Abschnitt der schlüssellochförmigen Öffnung (152; 252; 352) sich um den Zapfen (140; 240; 340) erstreckt; und
ein Bewegen des Halters zu dem Vorsprung des Messeradapters hin, bis sich der erste kreisförmige Abschnitt der schlüssellochförmigen Öffnung des Halters über den Vorsprung des Messeradapters bewegt und wobei der Halter mit der Nut (146; 246; 346) des Zapfens in Eingriff steht, wodurch er das Messer sicher drehbar an der Scheibe angebracht hält.

11. Verfahren nach Anspruch 10,
die Abnahme eines Messers (50) beinhaltend, umfassend:
(a) Stemmen des ersten Endes des Halters (130; 230; 330) nach oben;
(b) Bewegen des ersten Endes des Halters über die Oberseite des Vorsprungs des Messerhalters;
(c) derartiges Bewegen des Halters, dass sich der erste kreisförmige Abschnitt der schlüssellochförmigen Öffnung (152; 252; 352) des Halters über den Zapfen (140; 240; 340) bewegt;
(d) derartiges Bewegen der relativen Position des Zapfens und des Halters, dass der erste kreisförmige Abschnitt der schlüssellochförmigen Öffnung des Halters den Zapfen nicht mehr umgibt; und
(e) derartiges Bewegen des Zapfens, dass er sich nicht mehr durch die Öffnung (52) in dem Messer und durch die zylindrische Öffnung in dem Messeradapter erstreckt, wodurch das Messer neu ausgerichtet oder ausgetauscht werden kann.

## Revendications

1. Dispositif faucheur (10) comprenant un disque (120 ; 220 ; 320), le disque fournissant un support pour au moins un couteau (50), ledit couteau étant monté de manière à pouvoir pivoter sur ledit disque par une broche de pivot (140 ; 240 ; 340), ladite broche de pivot définissant un axe de montage, de sorte que le couteau puisse tourner autour de ladite broche de pivot entre une première position étendue et toute position rétractée, ledit disque étant construit d'une épaisseur de matériau de base et comprenant une surface de montage ; ledit dispositif faucheur comprenant un adaptateur de couteau (130 ; 230 ; 330) comprenant une ouverture cylindrique (132 ; 232 ; 332) et une projection (136 ; 236) ; ladite broche de pivot comprenant une première section cylindrique (142 ; 242 ; 342) d'un premier diamètre pour entrer dans ladite ouverture cylindrique dans ledit adaptateur de couteau, et une deuxième section cylindrique (144 ; 244 ; 344), d'un deuxième diamètre, avec une gorge (146 ; 246 ; 346) définie par une largeur de gorge et une épaisseur de section de broche au niveau de la gorge d'une dimension inférieure au dit deuxième diamètre ; ledit dispositif faucheur comprenant un dispositif de retenue (150 ; 250 ; 350) construit d'une épaisseur de matériau inférieure ou égale à la largeur de ladite gorge, avec une ouverture (152 ; 252 ; 352) définie par une première section circulaire (154 ; 254 ; 354) avec un premier diamètre intérieur supérieur au dit deuxième diamètre de ladite broche et une section (156 ; 256 ; 356) avec une largeur supérieure à ladite épaisseur de section de broche mais inférieure au dit deuxième diamètre de ladite broche de pivot ; dans lequel ladite section du dispositif de retenue se met en prise avec ladite gorge de ladite broche de pivot pour retenir ladite broche de pivot pendant que ladite projection dudit adaptateur de couteau se met en prise avec ledit dispositif de retenue, ledit couteau (50) a une ouverture (52) à l'intérieur de celui-ci, ledit disque ayant une ouverture (122), ledit adaptateur de couteau étant disposé dans ladite ouverture, ladite broche ayant une extrémité (142 ; 242 ; 342) étant configurée de manière opérationnelle pour ne pas traverser l'ouverture dans le couteau et l'autre extrémité (144 ; 244 ; 344) de la broche ayant un renfoncement à l'intérieur de celle-ci, ladite broche s'étendant à travers l'ouverture dans le couteau (50) et l'ouverture dans l'adaptateur de couteau, ledit dispositif de retenue étant également disposé sur l'autre extrémité de la broche à une première position de celle-ci, et lorsque le dispositif de retenue est déplacé dans une direction transversale à l'axe de la broche vers une deuxième position du dispositif de retenue, une première partie du dispositif de retenue se met en prise avec le renfoncement dans la broche et une deuxième partie du dispositif de retenue se met en prise avec quelque chose d'autre que la broche pour empêcher que le dispositif de retenue ne sorte du renfoncement dans la broche, **caractérisé en ce que,** ladite ouverture est une ouverture en forme de trou de clé (152 ; 252 ; 352) définie par la première section circulaire et ladite section, dans lequel ladite section est une section en forme d'encoche, ledit disque ayant une deuxième ouverture, ladite projection de l'adaptateur de couteau étant disposée dans la deuxième ouverture du disque, ledit dispositif de retenue mettant en prise ladite projection avec la première section circulaire de l'ouverture en forme de trou de clé.

2. Dispositif faucheur selon la revendication 1, dans lequel ledit dispositif de retenue de broche de pivot (130 ; 230 ; 330) est construit d'une épaisseur de matériau inférieure ou égale à ladite épaisseur de matériau de base dudit disque.

3. Dispositif faucheur selon la revendication 1 ou 2, dans lequel le quelque chose d'autre que la broche (140 ; 240 ; 340) est une projection inclinée attachée de manière opérationnelle à l'adaptateur de couteau (130 ; 230 ; 330), de telle manière que le mouvement de la deuxième partie du dispositif de retenue sur la projection inclinée amène la deuxième partie du dispositif de retenue à se déplacer au moins partiellement dans la première direction parallèle au deuxième axe lorsqu'elle est déplacée vers la deuxième position de celle-ci puis de retour dans une direction opposée à la première direction parallèle une fois que la deuxième partie du dispositif de retenue est disposée complètement sur la projection.

4. Dispositif faucheur selon la revendication 3, dans lequel ladite projection inclinée a une structure sur celle-ci pour retenir la deuxième partie du dispositif de retenue (150 ; 250 ; 350) à une position à laquelle un dispositif de levier peut être facilement placé sous la deuxième partie du dispositif de retenue pour faciliter l'enlèvement du dispositif de retenue.

5. Dispositif faucheur selon l'une quelconque des revendications précédentes, dans lequel ledit adaptateur de couteau (130 ; 230 ; 330) est soudé au dit disque (120 ; 220 ; 320).

6. Dispositif faucheur selon l'une quelconque des revendications 1 à 4, dans lequel ledit adaptateur de couteau (130 ; 230 ; 330) est monté de manière libérable sur ledit disque (120 ; 220 ; 320).

7. Dispositif faucheur selon la revendication 6, dans lequel ledit adaptateur de couteau (130 ; 230 ; 330) comprend une autre ouverture cylindrique pour recevoir un boulon (371) ou une vis pour monter l'adaptateur de couteau sur ledit disque (120 ; 220 ; 320), ledit disque ayant une autre ouverture pour recevoir ledit boulon ou ladite vis.

8. Dispositif faucheur selon la revendication 7, dans lequel ladite autre ouverture cylindrique a un filetage de vis (370).

9. Dispositif faucheur selon l'une quelconque des revendications précédentes, dans lequel la gorge de la broche de pivot (146 ; 246 ; 346) est formée par deux encoches (245), chacune d'un côté de la broche de pivot (240).

10. Procédé de changement de couteau (50) dans un dispositif (10) pour faucher comprenant un disque (110 ; 220 ; 320) monté sur un pilote rotatif, le disque fournissant un support pour au moins un couteau ayant une ouverture circulaire à l'intérieur de celui-ci, définissant une première ouverture ayant un axe de montage lorsqu'une broche de pivot (140 ; 240 ; 340) est retenue sur ledit disque, de sorte que le couteau puisse tourner autour de ladite broche de pivot entre une première position étendue et n'importe quelle position rétractée, le disque étant construit d'une épaisseur de matériau de base et comprenant une surface de montage ; un adaptateur de couteau (130 ; 230 ; 330) comprenant une ouverture cylindrique (132 ; 232 ; 332) ; ladite broche de pivot comprenant une première section cylindrique (142 ; 242 ; 342) d'un premier diamètre pour entrer dans ladite ouverture cylindrique dans l'adaptateur de couteau, et une deuxième section cylindrique (144 ; 244 ; 344), d'un deuxième diamètre, avec une gorge (146 ; 246 ; 346) définie par une largeur de gorge et une épaisseur de section de broche au niveau de la gorge d'une dimension inférieure au dit deuxième diamètre ; un dispositif de retenue (150 ; 250 ; 350) constitué d'une épaisseur de matériau inférieure ou égale à ladite épaisseur de matériau de base dudit disque, avec une première ouverture en forme de trou de clé (152 ; 252 ; 352) définie par une première section circulaire adjacente à une première extrémité de celle-ci avec un premier diamètre intérieur supérieur au dit deuxième diamètre de ladite broche et une section en forme d'encoche avec une largeur qui est supérieure à ladite épaisseur de section de broche mais inférieure au dit deuxième diamètre de ladite broche de pivot adjacente à une deuxième extrémité de celle-ci ; dans lequel ladite section en forme d'encoche du dispositif de retenue se met en prise avec ladite gorge de ladite broche de pivot pour obtenir ladite broche de pivot pendant que ladite projection dudit adaptateur de couteau se met en prise avec ledit dispositif de retenue, ledit procédé comprenant les étapes suivantes:
déplacer la broche (140 ; 240 ; 340) de sorte qu'elle s'étende à travers l'ouverture (52) dans le couteau (50) et à travers ladite ouverture cylindrique (132 ; 232 ; 332) dans l'adaptateur de couteau (130 ; 230 ; 330) et à travers la première ouverture dans le disque ; **caractérisé en ce que** le disque a également une deuxième ouverture à l'intérieur de celui-ci et **en ce que** ledit adaptateur de couteau comprend une projection, ledit procédé comprenant en outre les étapes suivantes :
déplacer l'adaptateur de couteau (130 ; 230 ; 330) de dessous le disque (20 ; 120 ; 220 ; 320) de sorte que la projection de celui-ci soit disposée dans la deuxième ouverture dans le disque ;
déplacer le dispositif de retenue de sorte que la première section circulaire de l'ouverture en forme de trou de clé (152 ; 252 ; 352) s'étende autour de la broche (140 ; 240 ; 340) ; et
déplacer le dispositif de retenue vers la projection de l'adaptateur de couteau jusqu'à ce que la première section circulaire de l'ouverture en forme de trou de clé du dispositif de retenue se déplace sur la projection de l'adaptateur de couteau et dans lequel le dispositif de retenue se met en prise avec la gorge (146 ; 246 ; 346) de la broche en maintenant de ce fait le couteau attaché de manière à pouvoir pivoter sur le disque en toute sécurité.

11. Procédé selon la revendication 10, incluant l'enlèvement du couteau (50) et comprenant les étapes suivantes :
(a) faire levier sur la première extrémité du dispositif de retenue (130 ; 230 ; 330) vers le haut ;
(b) déplacer la première extrémité du dispositif de retenue sur le sommet de la projection du dispositif de retenue de couteau ;
(c) déplacer le dispositif de retenue de sorte que la première section circulaire de l'ouverture en forme de trou de clé (152 ; 252 ; 352) du dispositif de retenue se déplace au-dessus de la broche (140 ; 240 ; 340) ;
(d) déplacer la position relative de la broche et du dispositif de retenue de sorte que la première section circulaire de l'ouverture en forme de trou de clé du dispositif de retenue n'entoure plus la broche ; et
(e) déplacer la broche de sorte qu'elle ne s'étende plus à travers l'ouverture (52) dans le couteau et à travers ladite ouverture cylindrique dans l'adaptateur de couteau, de telle manière que le couteau puisse être réorienté ou remplacé.
